# EUROPEAN PATENT APPLICATION

(11) **EP 2 987 398 A1**
(43) Date of publication of application: **24.02.2016**
(21) Application number: 14388003.7
(22) Date of filing: 20.08.2014
(51) Int. Cl.: A01G 13/00

(54) **Plug plant/tree protector and method of use**

(71) Applicant: P-Protect ApS, 7361 Ejstrupholm (DK)
(72) Inventor: Elkjær-Christensen, Pia, DK-7361 Ejstrupholm (DK); Kronborg Jensen, Jens Christian, DK-7160 Tørring (DK)
(74) Representative: Larsen, Hans Ole

(57) **Abstract**

The present invention relates to protection of plug plants/trees when planted in the field. More specifically, the invention relates to a degradable plug plant protector.

## Description

### Technical field of the invention

The present invention relates to protection of plug plants/trees when planted in the field. More specifically, the invention relates to a degradable plug plant protector.

### Background of the invention

Christmas trees and greenery are an important specialty crop. Each year approximately 33 to 36 million Christmas trees are produced in North America and 50 to 60 million trees are produced in Europe. In the United States, there are an estimated 15,000 growers. In Europe today, Germany produces an estimated 19 million trees followed by France at 9.2 million trees, Denmark at 8.5 million trees, Belgium at 5.2 million trees and the U.K. at 4.4 million trees. European consumers prefer relatively open trees with layered branches. In North America and Europe, there has been an increased emphasis on growing conifer species that have superior postharvest needle and moisture retention characteristics. In North America, this has resulted in a tremendous increase in the production of noble (A. procera) and Fraser fir (A. fraseri). This shift has coincided with decreased production of Scot's pine (Pinus sylvestris), and to a lesser extent, Douglas-fir (Pseudotsuga menziesii). In Europe, the increased production of Nordmann (A. nordmanniana) and noble fir (A. procera) is displacing Norway spruce (Picea abies) in their markets.

Typically, the production of Christmas trees requires 12 to15 years. Seeds are sown in seedbeds or directly into plugs and seedlings are grown for 3 months to 2 years, sometimes partly in greenhouses. The resulting seedlings are sold when ready for planting, or transplanted to 'line out' nursery beds, for one to three additional years. Thus, trees large enough to be transplanted to the plantation as plug plants/trees grow into the desired height of a Christmas tree in about 6 to 9 years.

Plug plants/trees are young plants/trees with well-established, complete and independent root systems, growing in a discrete and separate mass of growing medium, known as a plug. Easily handled, they are not subject to the damaging checks caused by early root disturbance. Grown from carefully selected seeds, plug plants/trees allow gardeners/ tree growers the pleasure and satisfaction of nurturing successful crops with little of the frustration involved in growing from seed or cuttings. The plug plants/trees grow into larger and stronger plants/trees earlier in the season than would normally be the case, producing superior crops with minimal outlay and minimal waste - ideal for anything from vegetables to annuals.

Even though the plug plants/trees are much stronger than seedlings when planted in the field, they are still susceptible to attack by e.g. beetles and rodents. Furthermore, when the gardener/ tree grower is removing weed near the plug plant/tree by using mechanical means, damage may be inflicted to the stem or lower branches of the plug plant/tree, increasing the possible entry points of a subsequent fungi and/or insect attack. Damage may also occur when the gardener/ tree grower is treating the plug plant/tree with insecticide or fungicide. When producing Christmas trees, the distributor wants trees where the lower part of the stem is without branches. Therefore, the tree grower cuts off the lower branches of the planted plug tree, which again increases the risk of a subsequent fungi and/or insect attack.

Hence, there is a general need for a method of protecting the planted plug plant/tree from damage. When producing Christmas trees, this is especially important during the first years of growth in the plantation.

### Summary of the invention

It is an object of the invention is to reduce or solve the above problems. The majority of the problems do not only relate to plug plants/trees for growing Christmas trees, but to plug plants/trees in general.

One aspect relates to a degradable plug plant protector comprising:
- a tubular element adapted for receiving a plug plant into its lumen, the tubular element comprising a first end adapted for covering the plug of the plug plant, and a second end adapted for receiving the growing plant;
   wherein at least a part of the first end is perforated, and wherein the perforations have a diameter of at least 1 mm;
   wherein the tubular element is made from a composition comprising
   i) at least 20% w/w polyolefin polymer;
   ii) at least 1% w/w calcium carbonate;
   iii) at least 0.01 % w/w pro-oxidant; and optionally
   iv) at least 0.01 % w/w additive.

Another aspect relates to a method for planting with a plug plant comprising the steps of:
- providing a degradable plug plant protector comprising a tubular element adapted for receiving a plug plant into its lumen, the tubular element comprising a first end adapted for covering the plug of the plug plant, and a second end adapted for receiving the growing plant;
   wherein at least a part of the first end is perforated, and wherein the perforations have a diameter of at least 1 mm;
   wherein the open-ended tubular element is made from a composition comprising
   i) at least 20% w/w polyolefin polymer;
   ii) at least 1% w/w calcium carbonate;
   iii) at least 0.01% w/w pro-oxidant; and optionally
   iv) at least 0.01 % w/w additive;
- providing a plug plant;
- positioning the plug plant within the lumen of the tubular element of the degradable plug plant protector such that the plug of the plug plant is in contact with the first end of said tubular element to provide a protected plug plant; and
- planting the protected plug plant within the soil of a field to be planted.

A third aspect relates to the use of a degradable plug plant protector for planting with a plug plant, wherein the degradable plug plant protector comprises:
- a tubular element adapted for receiving a plug plant into its lumen, the tubular element comprising a first end adapted for covering the plug of the plug plant, and a second end adapted for receiving the growing plant;
   wherein at least a part of the first end is perforated, and wherein the perforations have a diameter of at least 1 mm;
   wherein the tubular element is made from a composition comprising
   i) at least 20% w/w polyolefin polymer;
   ii) at least 1 % w/w calcium carbonate;
   iii) at least 0.01 % w/w pro-oxidant; and optionally
   iv) at least 0.01 % w/w additive.

Disclosed herein is a degradable plug plant protector for planting with a plug plant. The degradable plug plant protector comprises a tubular element adapted for receiving a plug plant into its lumen. The tubular element comprises a first end adapted for covering the plug of the plug plant, and a second end adapted for receiving the growing plant.

In the present context, a tubular element is a hollow element having an internal space or lumen or volume and openings between the internal volume and the surroundings of the tubular element. In this context, the surroundings is the space or volume outside the tubular element not forming part of the internal volume.

The tubular element extends along a longitudinal axis, which may be straight, bent, curved, or have any shape, which may depend on or be defined by e.g. the wanted shape of the stem of the plant or tree; or in which position the plug of the plug plant/tree is to be fixed within the tubular element. Preferably, the tubular element is straight. When watering the plug plant/tree after insertion into the tubular element, the plug expands just enough for the plug to be fixed within said tubular element. This way, the degradable plug plant protector and plug plant/tree can be planted combined; preferably with a planting pipe (a Pottiputki).

The height and diameter of the tubular element is varied according to the size of the plug plant/tree. Suitable examples are heights/lengths of 10-50 cm, and diameters of 25-80 mm. In one or more embodiments, the diameter of the tubular element is 1-20 mm larger than the plug of the plug plant to be inserted, such as 1-10 mm larger than the plug of the plug plant to be inserted.

When producing Christmas trees, the distributor wants trees where the lower part of the stem is without branches. Therefore, the tree grower cuts off the lower branches of the planted plug tree, which increases the risk of a subsequent fungi and/or insect attack.

By using a tubular element with a height of at least 15 cm, the lower branches of the plug plants/trees will be restricted to a lesser growth, or simply not develop. Hence, the tree grower will avoid having to cut the lower branches, or at least have to cut it less. Preferably, the diameter of the tubular element is within the range of 25-65 mm.

In one or more embodiments, the height of the tubular element is within the range of 10-50 cm, and the diameter of the tubular element is within the range of 25-80 mm.

In one embodiment, the plug plant/tree is selected from the group consisting of Pinaceae, and wherein the height of the tubular element is at least 15 cm.

Pinaceae (the pine family) are trees or shrubs, including many of the well-known conifers of commercial importance such as cedars, firs, hemlocks, larches, pines and spruces. The family is included in the order Pinales, formerly known as Coniferales. They are the largest extant conifer family in species diversity, with between 220-250 species (depending on taxonomic opinion) in 11 genera, and the second-largest (after Cupressaceae) in geographical range, found in most of the Northern Hemisphere with the majority of the species in temperate climates but ranging from sub-arctic to tropical.

As the plant belonging to the family Pinaceae can be used in the present invention, exemplified are Abies nordmanniana, Abies bornmülleriana, Abies procera, Abies lasiocarpa, Abies fraserii, Abies alba, Abies firma Sieb. & Zucc., Abies homolepis Sieb. & Zucc., Abies mariesii M. T. Mast., Abies sachalinensis (Friedr, Schmidt) M. T. Mast. var marie, Abies sachalinensis (Friedr, Schmidt) M. T. Mast., Abies veitchii Lindl., Cedrus deodara (Roxb. ex D. Don) G. Don, Larix gmelini (Rupr.) Kuzeneva, Larix Kaempferi (Lamb.) Carriere, Picea Abies, Picea abies (L.) Karst., Picea glehnii (Friedr. Schmidt) M. T. Masters, Picea jezoensis (Sieb. & Zucc.) Carriere var. hondoensis, Picea jezoensis (Sieb. & Zucc.) Carriere, Picea koyamae Shirasawa, Picea polita (Sieb. & Zucc.) Carriere, Pinus x densi-thunbergii Uyeki, Pinus densiflora Sieb. & Zucc., Pinus densiflora Sieb. & Zucc. cv. Umbraculifera, Pinus koraiensis Sieb. & Zucc., Pinus palustris Mill., Pinus parviflora Sieb. & Zucc. var. parviflora, Pinus parviflora Sieb. & Zucc. var. pentaphylla (Mayr) Henry, Pinus pumila (Pall.) Regel, Pinus rigida Mill., Pinus strobus L., Pinus sylvestris L., Pinus teada L., Pinus thunbergii Parl., Pseudotsuga japonica (Shiras.) Beissn., Tsuga diversifolia (Maxim.) M. T. Mast., Tsuga Sieboldii Carriere and the like. Of them, Pinus x densi-thunbergii Uyeki, Pinus densiflora Sieb. & Zucc., Pinus densiflora Sieb. & Zucc. cv. Umbraculifera, Pinus koraiensis Sieb. & Zucc., Pinus palustris Mill., Pinus parviflora Sieb. & Zucc. var. parviflora, Pinus parviflora Sieb. & Zucc. var. pentaphylla (Mayr) Henry, Pinus pumila (Pall.) Regel, Pinus rigida Mill., Pinus strobus L., Pinus sylvestris L., Pinus teada L. and Pinus thunbergii Parl. which are plants belonging to the genus Pinus are preferable, and particularly, Pinus densiflora Sieb. & Zucc., Pinus densiflora Sieb. & Zucc. cv. Umbraculifera, Pinus koraiensis Sieb. & Zucc., Pinus palustris Mill., Pinus pumila (Pall.) Regel, Pinus thunbergii Parl.

Preferably, the tubular element has a wall defining an end opening at each first end and second end and through which the longitudinal axis extends.

At least a part of the first end is perforated (i.e. the tubular element has side openings formed in the wall), and wherein the perforations have a diameter of at least 5 mm. This is important in order for the roots in the plug to grow sideways within the soil (i.e. at an angle to the longitudinal axis of the tubular element, such as at a lateral position or angle, i.e. an angle not identical to the longitudinal axis). This will allow for a better fastening of the plug plant/tree in the soil. The minimum diameter of the perforations/side openings is important to avoid that the roots growing through an individual perforation will be limited in its diameter at this position. A further importance of the minimum diameter is that the roots may be cut/damaged by the wall side of the perforation when the plug plant/tree is moving in the wind.

In some situations, depending on the thickness of the tubular element wall, the perforations/side openings may be limited in their maximum size in order to avoid that the tubular element collapses or brakes during mechanical impact, such as during planting or if it is windy.

In one or more embodiments, the diameter of the perforations/side openings is at least 1 mm, such as within the range of 2-100 mm, such as at least 5 mm, such as at least 10 mm, such as within the range of 10-95 mm, such as at least 15 mm, such as within the range of 15-90 mm, such as at least 20 mm, such as within the range of 20-85 mm, such as at least 25 mm, such as within the range of 25-80 mm, such as at least 30 mm, such as within the range of 30-75 mm, such as at least 35 mm, such as within the range of 35-70 mm, such as at least 40 mm, such as within the range of 40-65 mm, such as at least 45 mm, such as at least 50 mm.

Preferably, the part of the first end intended for positioning within the soil is perforated (i.e. has side holes/perforations).

In one or more embodiments, only the part of the first end intended for positioning within the soil is perforated. If the parts above the soil is perforated, insects may enter the tubular element, and damage the plug plant/tree.

The thickness of the tubular element is important to secure that the plug plant/tree protector allows just enough sunlight to pass through its wall. If is the plug plant/tree protector is completely transparent, the sunlight may damage the plug plant positioned within its lumen. In one or more embodiments, the wall of the tubular element has a thickness within the range of 0.1-2 mm, such as within the range of 0.2-1.9 mm, e.g. within the range of 0.3-1.8 mm, such as within the range of 0.4-1.7 mm, e.g. within the range of 0.5-1.6 mm, such as within the range of 0.6-1.5 mm, e.g. within the range of 0.7-1.4 mm, such as within the range of 0.8-1.3 mm, e.g. within the range of 0.9-1.2 mm, preferably within the range of 0.35-0.80 mm.

The present invention is directed to a degradable plug plant protector made of a composition of polyolefin, calcium carbonate, and pro-oxidant, which in combination makes the plug plant protector degradable. The term "degradable" is used herein to denote that the products of the present invention is both photodegradable, chemically degradable, and biodegradable - thus, truly environmentally degradable under most conditions.

The degradability of the plug plant/tree protector is important in order to avoid having to remove the protector manually after its use. Furthermore, from an environmentally view, the protector does not need to be discarded as waste, but degrades on site.

In order to provide a tubular element which is mechanically strong and degradable, it is made from a composition comprising
i) at least 20% w/w polyolefin polymer;
ii) at least 1 % w/w calcium carbonate; and
iii) at least 0.01% w/w pro-oxidant.

Depending on the type of plug plant/tree, the time needed for the plug plant protector to degrade may vary. Hence, different percentages of the individual components are needed for specific purposes. Especially for the production of trees, such as for the production of Christmas trees, a degradation time of more than two years is needed. In certain situations, it may then be necessary to add a light stabilizer as additive, in order to retard the degradation time.

In one or more embodiments, the composition comprises at least 0.01% w/w additive, and wherein the additive comprises a light stabilizer. Preferably, the light stabilizer is a hindered amine light stabilizer, such as Tinuvin® 622.

The term "light stabilizer" as used herein refers to, for example, a hindered amine compound for capturing radicals generated by deterioration of the composition or a UV absorber for capturing ultraviolet light.

Suitable light stabilizers include, but are not limited to, TINUVIN® 292, TINUVIN® 328, TINUVIN® 213, TINUVIN® 765, TINUVIN® 770 and TINUVIN® 622. TINUVIN® products are available from Ciba Specialty Chemicals of Tarrytown, N.Y.

In one or more embodiments, the composition comprises at least 0.01% w/w light stabilizer, such as within the range of 0.01-40% w/w, such as at least 0.05% w/w, such as within the range of 0.05-35% w/w, such as at least 0.1% w/w, such as within the range of 0.1-30% w/w, such as at least 0.2% w/w, such as within the range of 0.2-25% w/w, such as at least 0.3% w/w, such as within the range of 0.3-20% w/w, such as at least 0.4% w/w, such as within the range of 0.4-15% w/w, such as at least 0.5% w/w, such as within the range of 0.5-15% w/w, such as at least 1% w/w, such as within the range of 1-10% w/w, such as at least 2% w/w, such as within the range of 2-9% w/w, such as at least 3% w/w, such as at least 4% w/w, such as at least 5% w/w, such as at least 6% w/w, such as at least 7% w/w, such as at least 8% w/w, such as within the range of 0.1-5% w/w, such as within the range of 0.1-4% w/w, such as within the range of 0.1-3% w/w, such as within the range of 0.1-2% w/w, such as within the range of 0.1-1% w/w.

In the present context, the term "polyolefin" is defined as including homopolymers and copolymers of olefin monomers having from 2-12 carbon atoms. Examples of suitable polyolefins include without limitation high density polyethylene (linear ethylene polymers having a density of at least 0.945 grams/cm³), branched low density polyethylene (branched ethylene polymers having a density of about 0.900 to about 0.944 grams/cm³), linear low density polyethylene (linear ethylene-alpha olefin copolymers having a density of about 0.870 to about 0.944 grams/cm³ and including a C3 to C12 alpha-olefin comonomer), polypropylene homopolymers, propylene-ethylene copolymers, butene-1 homopolymers and copolymers, and the like. The term "polyolefin" also includes copolymers of olefins such as ethylene with vinyl acetate, methyl acrylate, methyl methacrylate, ethyl acrylate, ethyl methacrylate, butyl acrylate, acrylic acid, methacrylic acid, acid terpolymers and the like, which contain at least 50% by weight ethylene.

In one or more embodiments, the polyolefin polymer is polyethylene, polypropylene, or mixtures thereof.

In one or more embodiments, the composition comprises at least 20% w/w polyolefin polymer, such as within the range of 20-99% w/w, such as at least 25% w/w, such as within the range of 25-98% w/w, such as at least 30% w/w, such as within the range of 30-97% w/w, such as at least 35% w/w, such as within the range of 35-96% w/w, such as at least 40% w/w, such as within the range of 40-95% w/w, such as at least 45% w/w, such as within the range of 45-90% w/w, such as at least 50% w/w, such as within the range of 50-85% w/w, such as at least 55% w/w, such as within the range of 55-80% w/w, such as at least 60% w/w, such as within the range of 60-75% w/w, such as at least 65% w/w, such as at least 70% w/w, such as at least 75% w/w, such as at least 80% w/w, such as at least 85% w/w, such as at least 90% w/w.

In one or more embodiments, the composition comprises at least 1% w/w calcium carbonate, such as within the range of 1-85% w/w, such as at least 5% w/w, such as within the range of 5-80% w/w, such as at least 10% w/w, such as within the range of 10-75% w/w, such as at least 15% w/w, such as within the range of 15-70% w/w, such as at least 20% w/w, such as within the range of 20-70% w/w, such as at least 25% w/w, such as within the range of 25-65% w/w, such as at least 30% w/w, such as within the range of 30-60% w/w, such as at least 35% w/w, such as within the range of 35-60% w/w, such as at least 40% w/w, such as within the range of 40-55% w/w, such as at least 45% w/w, such as at least 50% w/w, such as at least 65% w/w, such as at least 70% w/w, such as at least 75% w/w, such as at least 80% w/w.

In the present context, the term "pro-oxidant" is any additive that indirectly or directly leads to oxo-degeneration of the polyolefin polymer. Such pro-oxidants can be based on metal combinations capable of yielding two metal ions of similar stability and with oxidation number differing by one unit, e.g., Mn²⁺/Mn³⁺. The material will thereby degrade by a free radical chain reaction involving atmospheric oxygen. The primary products are hydroperoxides, which can either thermolyse or photolyse under the catalytic action of a pro-oxidant, leading to chain scission and the production of low molecular mass oxidation products such as carboxylic acids, alcohols, ketones and low molecular mass hydrocarbon waxes. Peroxidation leads also to hydrophilic surface modification. Hydrophilic surface modification is favourable to microorganisms, which can then bio-assimilate the low molecular mass oxidation products.

Other examples of pro-oxidants are combinations of metal carboxylate and an aliphatic poly hydroxy carboxylic acid. The preferred metal carboxilates are cobalt, cerium and iron stearates, although other appropriate carboxylates contain aluminum, antimony, barium, bismuth, cadmium, chromium, copper, gallium, lanthanum, lead, lithium, magnesium, mercury, molybdenum, nickel, potassium, rare earths, silver, sodium, strontium, tin, tungsten, vanadium, yttrium, zinc or zirconium. Aliphatic poly hydroxy carboxylic acid refers to an aliphatic acid having one or various hydroxyl groups and one or various carboxyl groups. Examples are aliphatic dihydroxy carboxylic acid, such as glyoxylic and glyceric acids, poly hydroxyl monocarboxylic acids such as erythric, arabic or mannitic acid, mono hydroxy poly carboxylic acids, such as malic acid, and dihydroxy dicarboxylic acids, such as tartaric acid. Additionally, said additives can include calcium oxide and other appropriate additives. Some of the commercial trademarks of the pro-oxidants described in the above paragraph are: Envirocare® sold by Ciba Specialty Chemicals, under license of EPI Environmental Technologies. Another additive known in the art is Addiflex® of Add-X Biotech AB, ca Swedish company. The company EPI Environmental Technologies markets additives of this type under the name TDPA®. Another pro-oxidant known in the art is Celspan® sold by Phoenix Plastics, United States of America, and is particularly preferred in some embodiments of the present disclosure.

Preferably, the pro-oxidant is in the form of at least one salt of a metal of the group consisting of Mn, Fe, Cu, Co, and Ni.

In one or more embodiments, the pro-oxidant comprises metal carboxylates.

In one or more embodiments, the metal carboxylates comprises metal stearates.

In one or more embodiments, the pro-oxidant comprises aliphatic poly hydroxy carboxylic acids.

In one or more embodiments, the aliphatic poly hydroxy carboxylic acids are selected from the group consisting of aliphatic, dihydroxy, monocarboxyl acids; aliphatic, polyhydroxy, monocarboxyl acids; aliphatic, monohydric, dicarboxyl acids; aliphatic, dihyroxy, dicarboxyl acids; aliphatic, polyhydroxy, dicarboxyl acids; and aliphatic, monohydroxy, tricarboxyl acids.

In one or more embodiments, the additive and/or the pro-oxidant comprises starch.

In one or more embodiments, the pro-oxidant comprises:
a) 0.5-15% w/w carboxylates of Fe, Mn, Co, Ni or Cu;
b) 1.0-30% w/w starch;
c) 2.0-50% w/w calcium carbonate; and
d) 25-85% w/w polyethylene or polypropylene.

Preferred monomeric hindered amine light stabilizer are bis{2,2,6,6-tetramethyl-4-piperidinyl}sebacate (sold by Ciba-Geigy under the trade name of "Tinuvin® 770"), "Tinuvin® 622" and "Chimassorb® 944" by Ciba-Geigy and Chimosa respectively.

In one or more embodiments, the composition comprises at least 0.01% w/w pro-oxidant, such as within the range of 0.01-40% w/w, such as at least 0.05% w/w, such as within the range of 0.05-35% w/w, such as at least 0.1% w/w, such as within the range of 0.1-30% w/w, such as at least 0.2% w/w, such as within the range of 0.2-25% w/w, such as at least 0.3% w/w, such as within the range of 0.3-20% w/w, such as at least 0.4% w/w, such as within the range of 0.4-15% w/w, such as at least 0.5% w/w, such as within the range of 0.5-15% w/w, such as at least 1% w/w, such as within the range of 1-10% w/w, such as at least 2% w/w, such as within the range of 2-9% w/w, such as at least 3% w/w, such as at least 4% w/w, such as at least 5% w/w, such as at least 6% w/w, such as at least 7% w/w, such as at least 8% w/w, such as within the range of 0.1-5% w/w, such as within the range of 0.1-4% w/w, such as within the range of 0.1-3% w/w, such as within the range of 0.1-2% w/w, such as within the range of 0.1-1% w/w.

According to a preferred embodiment, the polyolefin is polypropylene.

According to a preferred embodiment, the polyolefin is polyethylene.

According to a preferred embodiment, the metal salt is a carboxylate.

In one or more embodiments, the aliphatic poly hydroxy carboxylic acids are selected from the group consisting of aliphatic, dihydroxy, monocarboxyl acids, such as glyoxylic acid and glyceric acid; the aliphatic, polyhydroxy, monocarboxyl acids, such as erythric acid, arabic acid or mannitic acid; the aliphatic, monohydric, dicarboxyl acids, such as tartronic acid or malic acid; the aliphatic, dihyroxy, dicarboxyl acids, such as tartaric acid; the aliphatic, polyhydroxy, dicarboxyl acids, such as trihydroxyglutaric acid and succharic acid; and the aliphatic, monohydroxy, tricarboxyl acids, such as citric acid.

According to a preferred embodiment, the carboxylate is selected from the group consisting of a stearate, an oleate, a palmitate or mixtures thereof.

In one or more embodiments, the tubular element is made from a composition comprising:
i) 20-99% w/w polyolefin polymer;
ii) 1-85% w/w calcium carbonate; and
iii) 0.01-40% w/w pro-oxidant.

In one or more embodiments, the tubular element is made from a composition comprising:
i) 20-99% w/w polyolefin polymer;
ii) 1-85% w/w calcium carbonate;
iii) 0.01-40% w/w pro-oxidant; and
iv) 0.01-40% w/w light stabilizer.

In one or more embodiments, the tubular element is made from a composition comprising:
i) 60-80% w/w polyolefin polymer;
ii) 10-30% w/w calcium carbonate; and
iii) 0.5-10% w/w pro-oxidant.

In one or more embodiments, the tubular element is made from a composition comprising:
i) 60-80% w/w polyolefin polymer;
ii) 10-30% w/w calcium carbonate; and
iii) 0.5-10% w/w pro-oxidant; and
iv) 0.01-5% w/w light stabilizer.

In one or more embodiments, the tubular element is made from a composition comprising:
i) at least 60% w/w polyolefin polymer;
ii) 10-30% w/w calcium carbonate; and
iii) 0.5-10% w/w pro-oxidant.

In one or more embodiments, the tubular element is made from a composition comprising:
i) at least 60% w/w polyolefin polymer;
ii) 10-30% w/w calcium carbonate; and
iii) 0.5-10% w/w pro-oxidant; and
iv) 0.01-5% w/w light stabilizer.

It should be noted that embodiments and features described in the context of one of the aspects of the present invention also apply to the other aspects of the invention.

### Brief description of the figures

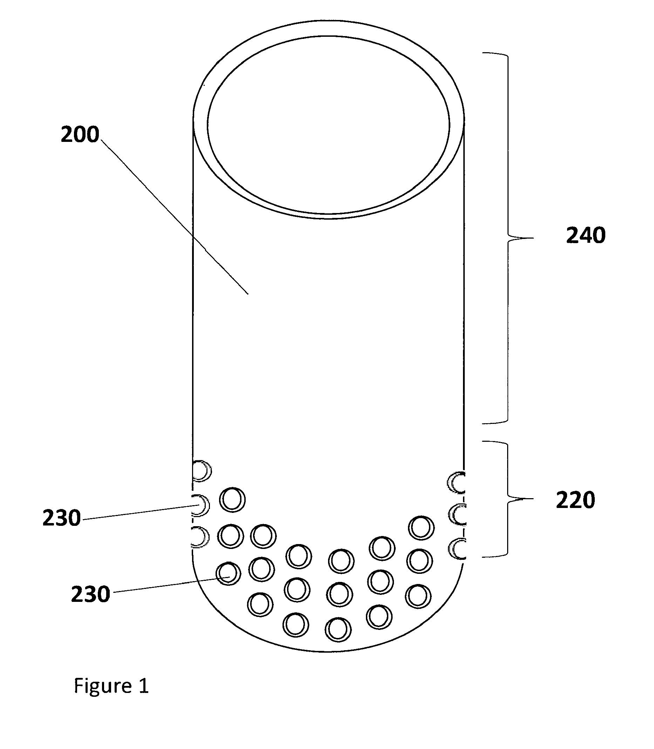

Figure 1 shows a device in accordance with various embodiments of the invention.

### Detailed description of the invention

Referring to Figure 1, the general scheme of the invention is shown. A degradable plug plant protector is shown comprising a tubular element (200) adapted for receiving a plug plant into its lumen. The tubular element comprises a first end (220) adapted for covering the plug of the plug plant, and a second end (240) adapted for receiving the growing plant. A part of the first end (220) is perforated with perforations (230). Here, the perforated part of the first end (220) is the part to be positioned within the soil.

### Experimental tests:

Four different compositions (Sample 1-4) were prepared with the weight percentages as shown in Table 1.

The polyolefin polymer chosen was a polypropylene - Moplen PP RP 2531. Omyalene 102 was chosen as the calcium carbonate source.

Addiflex® HES was used as the pro-oxidant.

Tinuvin® type 622 (granulated) was chosen as the light stabilizer.

**Table 1**

| Sample # | Polyolefin polymer | Calcium carbonate | Pro-oxidant | Light stabilizer |
|---|---|---|---|---|
| 1 | 87% w/w | 10% w/w | 3% w/w | - |
| 2 | 85% w/w | 10% w/w | 5% w/w | - |
| 3 | 74.09% w/w | 20% w/w | 5% w/w | 0.01% w/w |
| 4 | 74% w/w | 20% w/w | 5% w/w | 1% w/w |

Prepared films of the above compositions were exposed to accelerated weathering test according to ASTM D-5208-1. Film thickness used was 0.8 mm. The mechanical tests were made with an INSTRON 4301 according to ASTM D822 and ASTM D3826.

The tests gives an indication of the expected degradation behaviour under the assumption of an average temperature level of about 20 degrees Celsius for the tested material.

The results are shown in Table 2.

**Table 2**

| Weeks | | 0 | 3 | 6 | 9 | 12 |
|---|---|---|---|---|---|---|
| Stress N | Sample 1 | 252 | 160 | 155 | 127 | 99 |
| Stress N | Sample 2 | 263 | 155 | 153 | 131 | 77 |
| Stress N | Sample 3 | 234 | 230 | 230 | 222 | 226 |
| | | | | | | |
| Elongation % | Sample 1 | 631 | 4 | 10 | 9 | 7 |
| Elongation % | Sample 2 | 575 | 9 | 10 | 12 | 5 |
| Elongation % | Sample 3 | 570 | 247 | 42 | 12 | 11 |

### Production of tubular elements:

The tubular elements are produced by extrusion through a die. Extrusion is a high volume manufacturing process in which a polymer composition (a compound) is melted and formed into a continuous profile. Before entering the extruder, the composition is mixed into a compound according to methods well known in the art (e.g. compounding extrusion).

After leaving the extruder, the tubular element is cooled and cut to the desired length. The perforations/holes are then punched or drilled in the first end of the tubular element.

### References

- 200: Tubular element
- 220: First end
- 230: Perforation
- 240: Second end

## Claims

1. A degradable plug plant protector comprising:
- a tubular element adapted for receiving a plug plant into its lumen, the tubular element comprising a first end adapted for covering the plug of the plug plant, and a second end adapted for receiving the growing plant;
wherein at least a part of the first end is perforated, and wherein the perforations have a diameter of at least 1 mm;
wherein the tubular element is made from a composition comprising
i) at least 20% w/w polyolefin polymer;
ii) at least 1% w/w calcium carbonate;
iii) at least 0.01% w/w pro-oxidant; and optionally
iv) at least 0.01 % w/w additive.

2. A degradable plug plant protector according to claim 1, wherein the composition comprises at least 0.01% w/w additive, and wherein the additive comprises a light stabilizer.

3. A degradable plug plant protector according to claim 2, wherein the light stabilizer is a hindered amine light stabilizer, such as Tinuvin® 622.

4. A degradable plug plant protector according to any one of the claims 1-3, wherein the pro-oxidant comprises metal carboxylates.

5. A degradable plug plant protector according to claim 4, wherein the metal carboxylates comprises metal stearates.

6. A degradable plug plant protector according to any one of the claims 1-5, wherein the pro-oxidant comprises aliphatic poly hydroxy carboxylic acids.

7. A degradable plug plant protector according to claim 6, wherein the aliphatic poly hydroxy carboxylic acids are selected from the group consisting of aliphatic, dihydroxy, monocarboxyl acids; aliphatic, polyhydroxy, monocarboxyl acids; aliphatic, monohydric, dicarboxyl acids; aliphatic, dihyroxy, dicarboxyl acids; aliphatic, polyhydroxy, dicarboxyl acids; and aliphatic, monohydroxy, tricarboxyl acids.

8. A degradable plug plant protector according to any one of the claims 1-7, wherein the polyolefin polymer is polyethylene, polypropylene, or mixtures thereof.

9. A degradable plug plant protector according to any one of the claims 1-8, wherein the additive and/or the pro-oxidant comprises starch.

10. A degradable plug plant protector according to any one of the claims 1-9, wherein the wall of the tubular element has a thickness within the range of 0.35-0.80 mm.

11. A degradable plug plant protector according to any one of the claims 1-10, further comprising a plug plant/tree positioned within the lumen of the tubular element.

12. A degradable plug plant protector according to claim 11, wherein the plug plant is selected from the group consisting of Pinaceae, and wherein the height of the tubular element is at least 15 cm.

13. A method for planting a plug plant comprising the steps of:
- providing a degradable plug plant protector comprising a tubular element adapted for receiving a plug plant into its lumen, the tubular element comprising a first end adapted for covering the plug of the plug plant, and a second end adapted for receiving the growing plant;
wherein at least a part of the first end is perforated, and wherein the perforations have a diameter of at least 1 mm;
wherein the open-ended tubular element is made from a composition comprising
i) at least 20% w/w polyolefin polymer;
ii) at least 1% w/w calcium carbonate;
iii) at least 0.01% w/w pro-oxidant; and optionally
iv) at least 0.01 % w/w additive;
- providing a plug plant;
- positioning the plug plant within the lumen of the tubular element of the degradable plug plant protector such that the plug of the plug plant is in contact with the first end of said tubular element to provide a protected plug plant;
- planting the protected plug plant within the soil of a field to be planted.

14. A method according to claim 13, wherein the plug plant is selected from the group consisting of Pinaceae, and wherein the height of the tubular element is at least 15 cm.

15. Use of a degradable plug plant protector for planting with a plug plant, wherein the degradable plug plant protector comprises:
- a tubular element adapted for receiving a plug plant into its lumen, the tubular element comprising a first end adapted for covering the plug of the plug plant, and a second end adapted for receiving the growing plant;
wherein at least a part of the first end is perforated, and wherein the perforations have a diameter of at least 1 mm;
wherein the tubular element is made from a composition comprising
i) at least 20% w/w polyolefin polymer;
ii) at least 1 % w/w calcium carbonate;
iii) at least 0.01% w/w pro-oxidant; and optionally
iv) at least 0.01 % w/w additive.
